# EUROPÄISCHE PATENTANMELDUNG

(11) **EP 1 353 433 A2**
(43) Veröffentlichungstag der Anmeldung: **15.10.2003**
(21) Anmeldenummer: 02009193.0
(22) Anmeldetag: 25.04.2002
(51) Int. Cl.: H02K 7/00

(54) **Elektromotor mit einer keramischen Welle**

(30) Priorität: 09.04.2002 DE 10215493
(71) Anmelder: Atlas Copco Electric Tools GmbH, 71364 Winnenden (DE)
(72) Erfinder: Hess, Achim, 71404 Korb (DE)
(74) Vertreter: Riedel, Peter, Dipl.-Ing.

(57) **Zusammenfassung**

Ein Elektromotor, insbesondere für handgehaltene Elektrowerkzeuge, weist eine Ankerwelle (2), ein auf der Ankerwelle (2) drehfest angeordnetes Ankerblechpaket (3) und ein mit der Ankerwelle (2) verbundenes Abtriebselement auf. Für eine hohe Lebensdauer und eine gute Isolation ist vorgesehen, daß die Ankerwelle (2) aus einem keramischen Werkstoff besteht.

## Beschreibung

Die Erfindung betrifft einen Elektromotor, insbesondere für handgeführte Elektrowerkzeuge der im Oberbegriff des Anspruchs 1 angegebenen Gattung.

Elektromotoren weisen im allgemeinen eine Ankerwelle und ein auf der Ankerwelle angeordnetes Ankerblechpaket auf. Die Ankerwelle ist üblicherweise aus einem metallischen Werkstoff und gegenüber dem Ankerblechpaket elektrisch isoliert. Außerdem ist aus der DE 100 05 211 A1 ein Elektromotor bekannt, der für eine gute elektrische Isolierung eine Ankerwelle aus faserverstärktem Kunststoff aufweist. Es hat sich jedoch gezeigt, daß eine Ankerwelle aus faserverstärktem Kunststoff lediglich eine kurze Lebensdauer hat. Dies ist auf die geringe Steifigkeit der Ankerwelle zurückzuführen.

Der Erfindung liegt die Aufgabe zugrunde, einen Elektromotor der gattungsgemäßen Art mit guter Isolationswirkung und einer hohen Lebensdauer zu schaffen.

Diese Aufgabe wird durch einen Elektromotor mit den Merkmalen des Anspruchs 1 gelöst.

Eine Ankerwelle aus einem keramischen Werkstoff weist eine hohe Steifigkeit auf. Diese ist beispielweise gegenüber der Steifigkeit einer Ankerwelle aus Stahl um etwa 100% erhöht. Dadurch ergibt sich eine geringe elastische Verformung der Ankerwelle und eine hohe Lebensdauer. Gleichzeitig weist eine Ankerwelle aus einem keramischen Werkstoff ein geringes Gewicht auf. Dieses ist gegenüber einer Ankerwelle aus Stahl um etwa 20% reduziert. Außerdem bewirkt der keramische Werkstoff der Ankerwelle eine gute elektrische Isolierung zwischen Ankerblechpaket und den ebenfalls auf oder an der Ankerwelle befindlichen Bauteilen wie Lagern, Kollektor oder Ritzel.

Gemäß einer geeigneten Ausführung enthält der keramische Werkstoff vorzugsweise Aluminiumoxid, wobei das Aluminiumoxid insbesondere mit geringen Mengen Magnesiumoxid und/oder Manganoxid dotiert ist. Dotierung mit geringen Mengen bedeutet hier eine Dotierung im Millionstellbereich, d.h. im ppm-Bereich. Die Dotierung des Aluminiumoxids mit Magnesiumoxid und/oder Manganoxid führt zu einer Verbesserung der Herstellungsbedingungen, insbesondere zur Absenkung der Sintertemperaturen.

Gemäß einer weiteren Ausführung ist vorgesehen, daß der keramische Werkstoff Zirkonoxid enthält. Insbesondere zur Verbesserung der mechanischen Eigenschaften ist vorgesehen, daß das Zirkonoxid mit Yttriumoxid, Calciumoxid und/oder Magnesiumoxid dotiert ist. Vorteilhaft beträgt die Dotierung bis zu einigen Gewichtsprozent.

Eine weitere zweckmäßige Ausführungsvariante wird darin gesehen, daß der keramische Werkstoff Siliziumnitrid enthält, das mit geringen Mengen, d.h. im ppm-Bereich, mit Aluminiumoxid, Yttriumoxid und/oder Magnesiumoxid dotiert ist.

Zweckmäßig weist die Ankerwelle einen konstanten Durchmesser auf. In diesem Fall ist die Ankerwelle insbesondere durch ein Strangpreßverfahren vorgeformt, abgelängt und anschließend gesintert. Dies ermöglicht einen einfachen, rationellen Fertigungsprozeß. Es kann jedoch insbesondere für Ankerwellen mit aufwendiger Geometrie zweckmäßig sein, daß die Ankerwelle durch Pressen und Sintern in einer Form hergestellt ist. Das Pressen und Sintern der Ankerwelle in einer einzigen Form ermöglicht eine rationelle Herstellung. Absätze oder dergleichen können im Formprozeß direkt hergestellt werden. Insbesondere bei Ankerwellen mit konstantem Durchmesser oder bei Ankerwellen für geringere Belastungen ist vorgesehen, daß das Ritzel separat gefertigt und an einem Ende der Ankerwelle drehfest fixiert ist. Das Ritzel besteht insbesondere aus einem nichtkeramischen, vorzugsweise aus einem metallischen Werkstoff. Für Ankerwellen, die für hohe Belastungen ausgelegt sind, kann es jedoch vorteilhaft sein, Ritzel und Ankerwellen einteilig und aus einem keramischen Werkstoff auszubilden. Für das Ankerblechpaket ist vorgesehen, daß es auf die Ankerwelle aufgepreßt und/oder aufgeklebt ist.

Ein Ausführungsbeispiel der Erfindung wird im folgenden anhand der Zeichnung erläutert. Es zeigen:
- Fig. 1: einen Schnitt durch einen Ankerläufer eines Elektromotors,
- Fig. 2: einen Schnitt entlang der Linie II-II in Fig. 1,
- Fig. 3: eine Seitenansicht eines Ritzels.

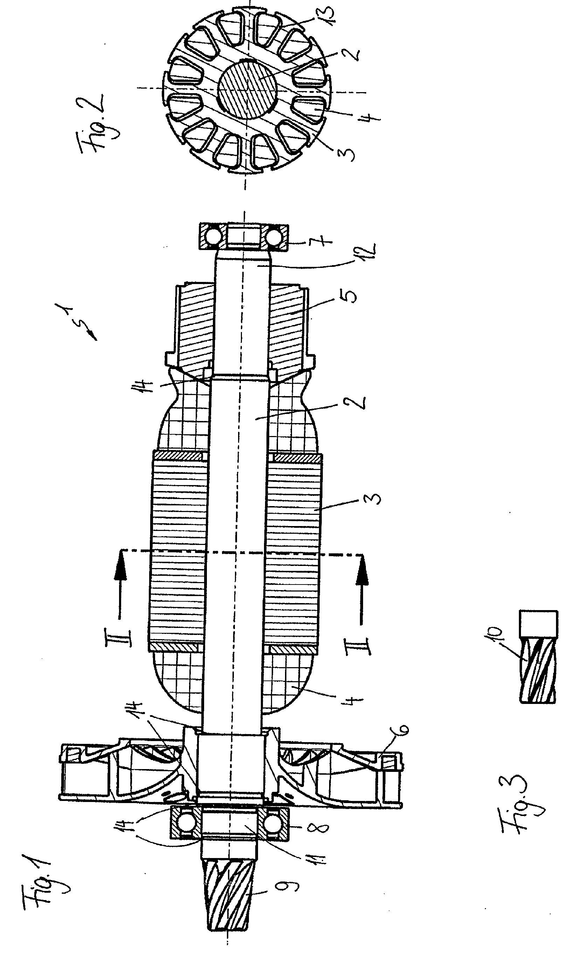

Der in Fig. 1 dargestellte Ankerläufer 1 weist eine Ankerwelle 2 auf, auf der ein Ankerblechpaket 3 drehfest angeordnet ist. Wie im Schnitt in Fig. 2 dargestellt weist das Ankerblechpaket 3 in Längsrichtung der Ankerwelle 2 verlaufende Nuten 13 auf, in denen die Ankerwicklung 4 aufgenommen ist. Das Ankerblechpaket 3 besteht dabei aus deckungsgleich übereinandergestapelten Einzelblechen.

In Richtung auf das Ende 12 der Ankerwelle 2 ist ein Kommutator 5 drehfest auf der Ankerwelle 2 angeordnet. Am gegenüberliegenden Ende 11 sind ein Lüfterrad 6 und auf der dem Ankerblechpaket 3 abgewandten Seite des Lüfterrads 6 ein Ritzel 9 drehfest mit der Ankerwelle 2 verbunden. Die Ankerwelle 2 ist an ihrem dem Ritzel 9 zugewandten Ende 11 mit einem Lager 8 und am gegenüberliegenden Ende 12 mit einem Lager 7 drehbar gelagert.

Die Ankerwelle 2 besteht aus einem keramischen Werkstoff und dient somit als Isolator zwischen dem Ankerblechpaket 3, den Lagern 7, 8 und dem Ritzel 9. Auch der Kommutator 5 ist über die Ankerwelle 2 vom Ritzel 9 elektrisch isoliert. Der keramische Werkstoff kann Aluminiumoxid (Al₂O₃) sein, das mit geringen Mengen, d.h. im ppm-Bereich, Magnesiumoxid (MgO) und/oder Manganoxid (MnO) dotiert ist. Es kann vorteilhaft sein, daß der keramische Werkstoff Zirkonoxid (ZrO₂) enthält, das insbesondere mit bis zu einigen Gewichtsprozent Yttriumoxid (Y₂O₃), Caiciumoxid (CaO) und/oder Magnesiumoxid (MgO) dotiert ist. Es kann statt dessen auch vorgesehen sein, daß der keramische Werkstoff Siliziumnitrid (Si₃N₄) enthält, wobei das Siliziumnitrid (Si₃N₄) vorteilhaft mit geringen Mengen Aluminiumoxid (Al₂O₃), Yttriumoxid (Y₂O₃) und/oder Magnesiumoxid (MgO) dotiert ist. Es können jedoch auch andere keramische Werkstoff oder Dotierungen zweckmäßig sein.

Die in Fig. 1 dargestellte Ankerwelle 2 weist über ihre Länge Absätze 14 auf, an denen sich der Durchmesser der Ankerwelle 2 ändert. Zweckmäßig ist die Ankerwelle 2 durch Verpressen in einer Form und sintern in dieser Form hergestellt. Die Form weist dabei die Kontur der Ankerwelle 2 auf, ist jedoch um das Schwindmaß vergrößert ausgebildet. Das Schwindmaß beträgt insbesondere etwa 16%. Das Ritzel 9 ist separat gefertigt und an dem Ende 11 der Ankerwelle 2 drehfest fixiert. Das Ritzel 9 kann dabei auf die Ankerwelle 2 aufgepreßt und/oder an dieser aufgeklebt sein. Es kann jedoch auch vorteilhaft sein, das Ritzel 9 an der Ankerwelle 2 anzuschrauben. Das Ritzel 9 besteht zweckmäßig aus einem nicht-keramischen, insbesondere aus einem metallischen Werkstoff. Vorteilhaft sind für eine Ankerwelle 2 unterschiedliche Ritzel 9, 10 vorgesehen.

Ein weiteres Ritzel 10, das an der Ankerwelle 2 fixiert sein kann, ist in Fig. 3 dargestellt. Durch die Möglichkeit der Verbindung unterschiedlicher Ritzel 9, 10 mit einer Ankerwelle 2 wird der Aufwand für Logistik und Lagerhaltung reduziert. Je nach konstruktiver Auslegung des Ankers kann es vorteilhaft sein, daß die Ankerwelle 2 einen konstanten Durchmesser über ihre gesamte Länge aufweist. Eine derartige Ankerwelle ist in geeigneter Weise durch ein Strangpreßverfahren als Endlosmaterial geformt hergestellt, abgelängt und anschließend gesintert. Hierdurch ergibt sich ein rationelles Herstellungsverfahren. Für Ankerwellen mit großer Belastung ist vorgesehen, daß das Ritzel mit der Ankerwelle einstückig ausgebildet ist, wobei das Ritzel aus keramischem Werkstoff besteht.

Das Ankerblechpaket 3 ist auf die Ankerwelle aufgepreßt. Es kann jedoch zweckmäßig sein, daß das Ankerblechpaket 3 mit geringer Pressung auf die Ankerwelle 2 aufgepreßt und zusätzlich mit dieser verklebt ist. Auch eine Fixierung nur durch Kleben kann vorteilhaft sein.

## Patentansprüche

1. Elektromotor, insbesondere für handgeführte Elektrowerkzeuge, mit einer Ankerwelle (2), einem auf der Ankerwelle (2) drehfest angeordneten Ankerblechpaket (3) und einem mit der Ankerwelle (2) verbundenen Abtriebselement,
**dadurch gekennzeichnet, daß** die Ankerwelle (2) aus einem keramischen Werkstoff besteht.

2. Elektromotor nach Anspruch 1,
**dadurch gekennzeichnet, daß** das Abtriebselement ein Ritzel (9, 10) ist.

3. Elektromotor nach Anspruch 1 oder 2,
**dadurch gekennzeichnet, daß** der keramische Werkstoff Aluminiumoxid (Al₂O₃) enthält.

4. Elektromotor nach Anspruch 3,
**dadurch gekennzeichnet, daß** das Aluminiumoxid (Al₂O₃) mit geringen Mengen Magnesiumoxid (MgO) und/oder Manganoxid (MnO) dotiert ist.

5. Elektromotor nach Anspruch 1 oder 2,
**dadurch gekennzeichnet, daß** der keramische Werkstoff Zirkonoxid (ZrO₂) enthält.

6. Elektromotor nach Anspruch 5,
**dadurch gekennzeichnet, daß** das Zirkonoxid (ZrO₂) mit Yttriumoxid (Y₂O₃), Calciumoxid (CaO) und/oder Magnesiumoxid (MgO) dotiert ist.

7. Elektromotor nach Anspruch 1 oder 2,
**dadurch gekennzeichnet, daß** der keramische Werkstoff Siliziumnitrid (Si₃N₄) enthält.

8. Elektromotor nach Anspruch 7,
**dadurch gekennzeichnet, daß** das Siliciumnitrid (Si₃N₄) mit geringen Mengen Aluminiumoxid (Al₂O₃) und/oder Magnesiumoxid (MgO) dotiert ist.

9. Elektromotor nach einem der Ansprüche 1 bis 8,
**dadurch gekennzeichnet, daß** auf der Ankerwelle (2) ein Kommutator (5) unmittelbar aufgepreßt oder geklebt ist.

10. Elektromotor nach einem der Ansprüche 1 bis 9,
**dadurch gekennzeichnet, daß** die Ankerwelle (2) einen konstanten Durchmesser aufweist.

11. Elektromotor nach Anspruch 10,
**dadurch gekennzeichnet, daß** die Ankerwelle (2) durch ein Strangpreßverfahren vorgeformt, abgelängt und anschließend gesintert ist.

12. Elektromotor nach einem der Ansprüche 1 bis 10,
**dadurch gekennzeichnet, daß** die Ankerwelle (2) durch Pressen und Sintern in einer Form hergestellt ist.

13. Elektromotor nach einem der Ansprüche 1 bis 12,
**dadurch gekennzeichnet, daß** das Ritzel (9, 10) separat gefertigt und an einem Ende (11) der Ankerwelle (2) drehfest fixiert ist.

14. Elektromotor nach Anspruch 13,
**dadurch gekennzeichnet, daß** das Ritzel (9, 10) aus einem nicht-keramischen, insbesondere aus einem metallischen Werkstoff besteht.

15. Elektromotor nach einem der Ansprüche 1 bis 14,
**dadurch gekennzeichnet, daß** das Ankerblechpaket (3) auf die Ankerwelle (2) aufgepreßt und/oder aufgeklebt ist.
